# FASCICULE DE BREVET EUROPEEN

(11) **EP 2 834 388 B1**
(45) Date de publication et mention de la délivrance du brevet: **01.01.2020**
(21) Numéro de dépôt: 13719581.4
(22) Date de dépôt: 27.03.2013
(51) Int. Cl.: C23C 10/48, C23C 10/52

(54) **PROCÉDÉ D'OBTENTION D'UN REVÊTEMENT D'ALUMINIURE DE NICKEL SUR UN SUBSTRAT MÉTALLIQUE, ET PIÈCE MUNIE D'UN TEL REVÊTEMENT**
VERFAHREN ZUR NICKELALUMINID BESCHICHTUNG EINES METALLISCHEN SUBSTRATS UND ENTSPRECHENDES BESCHICHTETES TEIL
METHOD FOR APPLYING A NICKEL ALUMINIDE COATING ON A METALLIC SUBSTRATE AND CORRESPONDING COATED PIECE

(30) Priorité: 02.04.2012 FR 1200978
(43) Date de publication de la demande: 11.02.2015
(73) Titulaire: Office National d'Etudes et de Recherches Aérospatiales (ONERA), 91120 Palaiseau (FR)
(72) Inventeur: BILHE Pascal, 33160 Saint Médard en Jalles (FR); BACOS Marie-Pierre, 92160 Antony (FR); JOSSO Pierre, 22430 Erquy (FR)
(74) Mandataire: de Kernier, Gabriel
(86) Numéro de dépôt international: PCT/FR2013/000081
(87) Numéro de publication internationale: WO 2013/150189

(56) Documents cités:
- WO-A2-2009/139833
- WO-A2-2009/139833
- JP-A- H04 250 995
- US-A1- 2003 211 239
- US-A1- 2003 211 239

## Description

L'invention concerne un procédé d'obtention d'un revêtement d'aluminiure de nickel sur un substrat métallique, ainsi qu'une pièce munie d'un tel revêtement.

La tenue mécanique et la résistance à l'oxydation des matériaux utilisés dans les turbines des moteurs aéronautiques limitent les performances de ces dernières. Des études prospectives récentes montrent que, pour les aubes de turbine, pour lesquelles la température de paroi atteint actuellement 1050 - 1100°C, l'optimisation des compositions des alliages métalliques employés (« superalliages » base nickel) et des procédés d'élaboration, l'amélioration des circuits internes de refroidissement des pièces et l'emploi de revêtements d'isolation thermique ne permettront pas d'atteindre les températures de paroi visées, de l'ordre de 1300°C. Une voie envisagée pour fonctionner à de telles températures est le recours à des matériaux composites constitués de deux phases fortement réfractaires, l'une métallique M (où M est une base Nb alliée avec de nombreux éléments tels Si, Ti, Cr, Hf, Al etc..) conférant au matériau une ténacité suffisante à température ambiante, et l'autre intermétallique M₅Si₃ apportant la résistance et la tenue au fluage souhaitées à haute température. Ces matériaux sont appelés ci-après « matériaux de type Nb-Si » ou « alliages de type Nb-Si »

Cependant, un frein à leur développement est leur faible résistance à l'oxydation à haute température, et ce malgré un grand nombre d'éléments « favorables » ajoutés à leur composition initiale (Si, Cr, B et Al). En effet, lorsqu'un tel matériau est soumis aux conditions de fonctionnement des turbines à gaz il est détruit par oxydation entre quelques minutes et une dizaine d'heures, selon la nuance utilisée.

Il apparaît que de façon générale, l'oxygène pénètre dans la phase métallique pour l'oxyder en premier, en laissant la phase intermétallique M₅Si₃ virtuellement non attaquée. Il semble que les interfaces ainsi que les joints de grains assistent la diffusion de l'oxygène.

Un autre problème réside dans le fait que, à faible température, typiquement entre 500 et 900°C, ce type de matériau est incapable de développer rapidement une couche d'oxydes protecteurs en raison d'une cinétique de diffusion très faible. Il en résulte une pénétration rapide de l'oxygène à cœur du matériau ce qui le fragilise. Ce type d'oxydation est appelé l'effet peste.

Les principales solutions développées pour protéger ces matériaux de type Nb-Si sont des procédés de revêtement par diffusion par pack cémentation, revêtements de siliciuration, de chromisation ou d'aluminisation ou plusieurs couplés.

Selon Guo, X.P., Zhao, L.X., Guan, P., Kusabiraki, K. 2007 Materials Science Forum 561-565 (PART 1), pp. 371-374 il est possible de protéger ce type de matériau avec un revêtement à base de silicium déposé par pack cémentation mais avec un activateur halogéné. Xiaoxia Li et Chingen Zhou, 2007 Materials Science Forum 546-549 (PART 3), pp. 1721-1724, ont appliqué la siliciuration par pack cémentation activée par activateur halogéné sur un alliage de siliciure de niobium revêtu par un MCrAlY déposé par projection plasma sous air, le revêtement obtenu uniquement par siliciuration n'étant pas assez protecteur.

Chen Chen et al dans Intermetallics, 15 (2007) 805-809, proposent également de protéger un matériau de type Nb-Si avec un revêtement de silicium comprenant également du chrome. Le chrome est déposé par pack cémentation à partir de poudre de chrome et d'un activateur halogéné. Le silicium est déposé soit par pack cémentation à partir de poudres de silicium et d'un activateur halogéné soit par sels fondus.

Toujours à partir de procédés pack cémentation avec activateur halogéné, Tian et al proposent un revêtement à base de silicium et comprenant soit de l'aluminium (Surface and Coating Technology, 203 (2009) 1161-1166) soit de l'yttrium (Surface and Coating Technology, 204 (2009) 313-318)
Le problème majeur de toutes ces techniques publiées dans la littérature ouverte est l'emploi d'activateurs halogénés qui forment, avec les composants des siliciures de niobium, des gaz halogénés très réactifs ce qui dégrade localement la microstructure. Il y a donc nécessité de développer une technique qui permet de créer un revêtement par diffusion sans utiliser de gaz halogéné.

La publication FR 2965568 décrit un procédé pour former un revêtement protecteur contre l'oxydation à haute température sur une surface d'un matériau composite réfractaire à base de silicium et de niobium, dans lequel on fait réagir sur du chrome présent sur la surface à protéger un gaz réactif non halogéné contenant du silicium et de l'oxygène pour élaborer un revêtement composite à deux phases, dont une première phase est une phase oxyde à base de silice présentant des caractéristiques viscoplastiques et dont une seconde phase est à base de silicium, de chrome et d'oxygène, et dans lequel l'on fait coalescer lesdites première phase et seconde phase à haute température, ce qui permet de former un revêtement protecteur dans lequel la seconde phase sert de réservoir pour reformer, en service, la première phase par réaction avec un gaz oxydant.

L'inconvénient de ces types de procédés, que le gaz réactif soit halogéné ou non, est la nécessité d'utiliser de l'énergie, ces traitements se faisant en four à haute température. Un autre inconvénient pour les revêtements à base de silicium, et de chrome est leurs sensibilités à la vapeur d'eau. Quant au revêtement NiAl obtenu par les techniques précitées, en raison de la différence des coefficients de dilatation entre le β-NiAl (15.10⁻⁶K⁻¹) et le matériau de type Nb-Si (10.10⁻⁶K⁻¹) le revêtement se fissure en service.

Dans un autre domaine, il a été vérifié que, du fait de la forte disparité chimique, il est impossible d'obtenir par les techniques actuelles de revêtement par diffusion (cémentation en pack ou dépôt chimique en phase vapeur) un revêtement homogène d'aluminiure de nickel sur un assemblage de matériaux, que ces matériaux, homogènes ou hétérogènes, soient brasés, soudés ou simplement vissés ou rivetés. A titre d'exemple, il est, à l'heure actuelle, impossible de revêtir d'un β-NiAl l'assemblage d'un alliage niobium silicium et d'un superalliage base nickel, quelle que soit la technique d'assemblage utilisée, et encore moins en une seule opération. Les autres techniques de dépôt d'un alliage NiAl, tels que la Pulvérisation Cathodique Triode (PCT) ou le Dépôt Physique en phase Vapeur (PVD) sont directionnelles et non adaptées aux formes complexes. Enfin le Dépôt Chimique en Phase Vapeur (CVD) ne permet que de faibles vitesses de dépôt (l'ordre d'un micromètre par heure) incompatibles avec une production industrielle
On sait par ailleurs que la réaction de synthèse d'un matériau NiAl à partir de poudre de Ni et de poudre de Al est bien connue.

Ainsi K. Morsi dans l'article « Review : reaction synthesis processing of Ni-Al intermetallic Materials », Materials Science and Engineering A 299 (2001) 1-15, mentionne principalement deux procédés mis en œuvre à partir de poudres de nickel et d'aluminium. L'un des procédés dénommé « Self-propagating High temperature Synthesis » (en abrégé SHS) réalise une synthèse à auto propagation et à haute température. L'autre procédé met en œuvre une explosion thermique ou une combustion simultanée et peut être qualifié de procédé par combustion.

Les articles de U. Anselmi-Tamburini et Z.A. Munir (The propagation of a solid-state combustion wave in Ni-Al foils dans J. Appl. Phys., 1989, vol. 66, pp 5039-45), de D.E. Alman, J.C. Rawers et J.A. Hawk (Microstructural and Failure Characteristics of Metal-Intermetallic Layered Sheet Composites dans Metallurgical and Materials Transactions A, vol. 26A, 1995, 589 et suivantes) et de Ping Zhu, J.C.M. Li et C.T. Liu (Combustion reaction in multilayer nickel and aluminium foils, dans Material Science and Engineering, A 239-240, 1997, 532-539) enseignent que l'on peut aussi faire la synthèse de composés intermétalliques, dont Ni-Al, avec des feuilles alternées de nickel et d'aluminium.

La publication FR 2752540 décrit un procédé d'application d'un revêtement NiAI qui s'applique spécifiquement aux superalliages à base de nickel ou de cobalt. Il s'agit d'un procédé du type SHS utilisant des poudres compactées avec application sur la pièce (mélange poudres + alliage) d'un gradient thermique (200°C), d'une forte pression (pression hydrostatique du four allant jusqu'à 1,5 GPa) et une température de 1200°C.

La publication FR 2838753 décrit un procédé analogue mais pour le rechargement des superalliages à base de nickel ou de cobalt.

Une autre application de revêtement, ici NiAIPt, est décrite, toujours pour des superalliages à base de nickel, par M.C. Record, H. de Jouvancourt et R.M. Marin-Ayral (Elaboration of Platinum-Modified NiAl Coatings by Combustion Synthesis : Simultaneous Repairing and Coating of Ni-based Superalloys, dans International Journal of Self-Propagating High-Temperature Synthesis, 2007, Vol. 16, N° 4, pp 199-206). Il s'agit dans cet article d'un procédé SHS avec une feuille de brasure introduite entre le superalliage à base Nickel et le mélange de poudre nickel-aluminium-platine compacté, le tout étant mis dans un four avec un gradient thermique et sous haute pression.

Toutes ces techniques réclament un gradient thermique sur la pièce et des fortes pressions qui ne sont pas faciles à mettre en œuvre surtout pour des objets à parois fines qui pourraient être déformées par l'effet de la pression.

La publication US 2003/0211239 décrit un procédé d'aluminisation par diffusion et enseigne plus particulièrement que, pour faire un revêtement de NiAl, on doit réaliser un dépôt électrolytique composite comprenant des poudres dont éventuellement une poudre d'aluminium. Ce dépôt doit être cuit au-delà de 871,11°C (1600°F), soit à une température supérieure au point de fusion de l'aluminium pur. Dans le cas où la quantité d'aluminium n'est pas suffisante, on apporte le complément par un procédé d'aluminisation par diffusion.

La publication WO 2009/139833 décrit un procédé de fabrication d'une couche barrière d'aluminiure, dans lequel la couche barrière comprend un aluminure de nickel, de fer ou une combinaison de ceux-ci, et la couche d'arrêt est produite par un procédé de revêtement par diffusion sur au moins une surface de l'article. Il s'agit donc d'un procédé d'aluminisation mis en œuvre à des températures bien supérieures au point de fusion de la l'aluminium pur, par exemple de 800°C à 1200°C et de 900°C à 1100°C. Le procédé prévoit aussi de plaquer une feuille d'aluminium à la surface du substrat et que le recuit ait lieu entre 700 et 1200°C, donc bien au-delà de la température de fusion de l'aluminium. Il s'agit donc d'une technique par réaction avec de l'aluminium liquide.

L'invention a notamment pour but de surmonter les inconvénients précités.

Elle vise notamment à procurer un procédé d'obtention d'un revêtement d'aluminiure de nickel sur un substrat métallique, en particulier en un matériau de type Nb-Si, sans emploi de gaz halogéné, sans utilisation de fortes pressions et à basse température.

L'invention telle que définie dans la revendication 1 propose à cet effet un procédé du genre défini ci-dessus, qui comprend les étapes suivantes :
a) revêtir le substrat d'un dépôt de nickel;
b) appliquer une feuille d'aluminium sur le dépôt de nickel de l'étape a) pour former un ensemble constitué par le substrat revêtu du dépôt de nickel et de la feuille d'aluminium ; et
c) soumettre cet ensemble à un traitement thermique à une température de 550°C à 655°C, pendant au moins 1 heure et sous un vide meilleur que 10-4 Pa, pour provoquer une réaction entre l'aluminium et le nickel et former ainsi une couche d'alumniure de nickel β-NiAl surmontant une couche de nickel, et ce sans emploi de gaz halogéné.

Le procédé de l'invention permet ainsi de créer, sur le substrat métallique à revêtir, un revêtement multi couches, à coefficients de dilatation adaptés, à base d'aluminiure de nickel et d'alliage de nickel, et ce sans emploi de gaz halogéné et à basse température.

Il offre aussi l'avantage de ne pas utiliser de pression élevée, mais au contraire une pression réduite, si bien qu'il n'y a pas besoin d'un montage spécifique pour le substrat ou pour la pièce formée à partir du substrat.

Le procédé ne nécessite pas de feuille de brasure entre le substrat métallique à protéger et la première couche de nickel. Il n'est pas nécessaire non plus d'appliquer de gradient thermique au substrat ou à la pièce.

En outre le procédé de l'invention s'applique principalement aux matériaux composites à base de type Nb-Si, ne contenant pas de nickel, mais peut être étendu à d'autres alliages comme les alliages base fer dont les aciers (c'est à dire les alliage base fer dont la teneur en carbone est comprise entre 0,008 % et 2,14 % en masse) qu'ils soient alliés ou traités, les alliages base nickel (alliages réfractaires et superalliages), les alliages base cobalt (alliages réfractaires et superalliages), les alliages base titane et certains intermétalliques comme les aluminiures de titane TiAl.

De plus ce procédé permet des réparations locales du revêtement soit après fabrication en cas d'écaillage suite à une erreur de manipulation d'une pièce, soit après vieillissement en service.

Par l'expression « dépôt de nickel » on entend désigner ici un dépôt à base de nickel, c'est-à-dire soit un dépôt de nickel pur, soit un dépôt d'un alliage de nickel.

Le substrat métallique (matériau de type Nb-Si, ou autre matériau métallique) est ainsi revêtu d'un dépôt de nickel ou d'un alliage contenant du nickel. Un tel alliage de nickel peut comprendre au moins un élément choisi parmi W, Ce, Cr, Pt, Pd, Y, Hf et Zr, cette liste n'étant pas limitative.

L'invention englobe ainsi aussi bien un dépôt de nickel pur que des co-dépôts, par exemple de Ni-W, Ni-Re, Ni-Cr, Ni-Pd, Ni-Pt, Ni-Zr.

Ainsi l'étape a) peut comprendre un dépôt de nickel, suivi d'un dépôt d'un alliage de nickel en particulier d'un alliage de nickel-palladium.

En variante, l'étape a) peut être précédée d'une étape préalable de dépôt d'une couche d'un métal autre que du nickel, en particulier de chrome.

Ces co-dépôts ont l'avantage de permettre d'avoir une meilleure résistance à l'oxydation par rapport à un simple revêtement de NiAl obtenu à partir d'un dépôt de nickel pur et d'une feuille d'aluminium. En outre un dépôt de NiW, en plus du revêtement de NiAl, permet de créer une barrière de diffusion et de stabiliser le NiAl.

Ces dépôts peuvent-être réalisés par voie humide (voie électrolytique ou voie chimique), ou par voie sèche, par exemple par Pulvérisation Cathodique Triode (PCT), par Dépôt Physique en Phase Vapeur (PVD), par Dépôt Chimique en Phase Vapeur (CVD), ou encore par toute autre méthode connue de l'homme de l'art.

L'étape a) peut être suivie directement par l'étape b) d'application de la feuille d'aluminium.

Il est avantageux cependant de faire suivre l'étape a) d'une étape intermédiaire de recuit du dépôt de nickel, ce qui provoque une diffusion du nickel au sein du substrat et augmente l'accrochage du nickel sur le substrat.

De préférence, l'étape b) comprend l'application d'une ou de plusieurs feuilles d'aluminium pur, sur le substrat revêtu du dépôt de nickel et la déformation de la feuille ou des feuilles d'aluminium pour s'adapter à la forme du substrat. La flexibilité de la feuille est telle qu'il est possible, par simple pliage, de recouvrir toute une pièce par une ou plusieurs couche d'aluminium, ce qui permet de gérer la quantité d'aluminium introduite dans le revêtement.

L'ensemble ainsi obtenu est ensuite soumis au traitement thermique de l'étape c), à une température inférieure à la température de fusion de l'aluminium (660,3°C). Le choix de cette température est de pouvoir initier la réaction de formation de NiAl sans que l'aluminium ne fonde ni ne coule. De ce fait on peut appliquer le procédé à toutes pièces de toute forme sans outillage ou inclinaison particulière de la pièce. Ainsi, dans le cas d'une pièce présentant des creux, il n'y aura pas de surconcentration d'aluminium suite à une fusion et écoulement dans ce creux.

Le traitement thermique de l'étape c) est effectué à une température comprise entre 550°C et 655°C. En effet, en dessous de 550°C, il y a des risques de formation d'un NiAl plus poreux que celui élaboré à plus haute température. Le traitement thermique est effectué de préférence à une température de 650°C, pendant au moins 1 heure, de préférence pendant 5 heures, et sous un vide meilleur que 10⁻⁴Pa. En général, on procède à une montée en température de 10K/minute jusqu'à 650°C puis à un traitement thermique à cette température pendant une durée de 5 heures. Comme on le verra plus loin, la durée du traitement thermique peut être plus courte.

Tout l'aluminium déposé sous forme de feuille réagit avec le nickel préalablement déposé pour former le composé β-NiAl. Si la quantité de nickel, exprimée en nombre d'atomes, préalablement déposé est supérieure à celle d'aluminium, toujours exprimée en nombre d'atomes, on obtient une bicouche constituée d'une part de β-NiAl surmontant une couche de nickel pur d'autre part. L'épaisseur résiduelle de cette dernière est donc réglable en fonction de la quantité d'aluminium utilisée et de l'épaisseur de revêtement protecteur souhaité. Sur une même pièce on peut ainsi par pliage successif obtenir des zones avec des proportions variables entre l'épaisseur de la couche de Ni et celle de la couche de β-NiAl.

L'étape c) de traitement thermique peut être suive par une étape d) de recuit sous vide ou sous atmosphère contrôlée, de préférence sous argon, et à une température comprise entre 800 et 1200°C. Ceci permet d'obtenir un revêtement de β-NiAl proche de la stoechiométrie et de gérer la couche d'adaptation en nickel pur.

Le substrat métallique est formé d'au moins un matériau choisi parmi les matériaux de type Nb-Si, les alliages base fer dont les aciers (c'est à dire les alliage base fer dont la teneur en carbone est comprise entre 0,008 % et 2,14 % en masse) qu'ils soient alliés ou traités, les alliages base nickel (alliages réfractaires et superalliages), les alliages base cobalt (alliages réfractaires et superalliages), les alliages base titane et certains intermétalliques comme les aluminiures de titane TiAl. Cette liste n'est pas limitative.

Le procédé de l'invention offre différentes possibilités d'application.

Le revêtement d'aluminiure de nickel peut être appliqué sur une pièce neuve formée à partir du substrat. Il peut aussi être appliqué sur un revêtement existant d'une pièce pour une réparation locale de ce revêtement existant.

La pièce peut être formée d'un seul matériau ou d'un assemblage de deux matériaux.

Lorsque le procédé est utilisé pour la réparation locale d'un revêtement existant, l'étape a) comprend avantageusement un dépôt de nickel par une retouche de nickel par électrolyse au tampon et l'étape b) comprend avantageusement l'application d'une petite feuille d'aluminium sur la retouche de nickel.

Sous un autre aspect, l'invention concerne une pièce comprenant un substrat métallique muni d'un revêtement en aluminiure de nickel tel qu'obtenu par la mise en œuvre du procédé tel que défini ci-dessus.

L'invention sera décrite de manière plus détaillée dans les exemples suivants.

### Exemple 1

On se propose de construire un revêtement protecteur sur un alliage réfractaire à base de niobium et de silicium appelé matériau de type Nb-Si.

Pour ce faire, après un sablage humide avec de l'alumine de granulométrie 320 mesh (40 µm) sous une pression de 5 bars, on commence par revêtir le substrat par un dépôt électrolytique de nickel selon une technique bien connue de l'homme de l'art :

| | | |
|---|---|---|
| Sulfamate de nickel | Ni(SO₃NH₂)₂ | 350 g/l |
| Chlorure de nickel | NiCl₂, 6 H₂O | 3,5 g/l |
| Acide borique | H₃BO₃ | 40 g/l |
| Température | 45°C | |
| Densité de courant | 2 ≤ J ≤ 5 A/dm² (3 A/dm²) | |

On dépose ainsi un revêtement de nickel de 45 µm d'épaisseur.

Au cours d'une deuxième étape, on enveloppe le matériau de type Nb-Si nickelé par une feuille d'aluminium du commerce de 17 µm d'épaisseur. On appellera cette étape « application d'une feuille d'aluminium » et l'ensemble de l'opération « revêtement d'aluminium ».

L'ensemble (matériau de type Nb-Si nickelé et feuille d'aluminium) est introduit dans un four sous un vide meilleur que 10⁻⁴ Pa. On y opère un recuit à 650°C pendant 5 heures, soit en deçà de la température de fusion de l'aluminium.

Après traitement thermique on observe que l'aluminium a totalement réagi et qu'il n'y a eu aucune perte en aluminium (Mₐᵥₐₙₜ Traitement Thermique = M_{après} Traitement Thermique).

L'examen d'une coupe métallographique, effectué sur un échantillon conforme à l'exemple, par microscopie électronique à balayage montre qu'il y a eu formation d'une couche de β-NiAl non fissurée. Son épaisseur est d'environ 85 µm et son coefficient de dilatation est égal à 15,5.10⁻⁶ K⁻¹. Cette couche surmonte une couche de nickel résiduel d'une épaisseur d'environ 25 µm et de coefficient de dilatation égal à 13.10⁻⁶ K⁻¹. L'ensemble enrobe totalement le substrat en alliage niobium silicium dont le coefficient de dilatation est égal à 10.10⁻⁶ K⁻¹.

Il est à noter que ce traitement peut être suivi d'un recuit dit d'homogénéisation. Pour ce faire il suffit de recuire le revêtement obtenu sous vide, ou de préférence sous argon, pendant un laps de temps en rapport avec la quantité d'aluminium résiduel désiré. La température de ce recuit est comprise entre 800 et 1200°C, de préférence 1050°C. De cette manière on obtient un revêtement de β-NiAl proche de la stoechiométrie, voire légèrement sous-stoechiométrique. De plus, ce recuit permet de gérer l'épaisseur finale de la couche d'adaptation en nickel pur.

### Exemple 2

On opère comme dans l'exemple 1 sauf qu'on rajoute une étape intermédiaire de recuit de nickel après le dépôt électrolytique.

Le nickel est diffusé pendant 1 heure à 1100°C ce qui permet d'augmenter l'accrochage du nickel sur le matériau de type Nb-Si.

Après application d'une feuille d'aluminium et traitement thermique identique à celui de l'exemple 1 (T = 650°C, P = 10⁻⁴ Pa, t = 5 heures) on obtient une couche de β-NiAl surmontant une couche de Ni résiduelle fortement adhérente à son substrat et servant d'adaptateur de coefficient de dilatation.

### Exemple 3

On opère avec un alliage réfractaire à base de niobium et de silicium appelé matériau de type Nb-Si comme dans l'exemple 1, sauf que le revêtement de nickel d'épaisseur de 45µm est déposé par pulvérisation cathodique triode à partir d'une cible de nickel, la feuille de papier d'aluminium étant de 17 µm.

On obtient alors des résultats identiques à ceux de l'exemple 1

### Exemple 4

On se propose de construire un revêtement protecteur sur un alliage réfractaire à base de niobium et de silicium.

Pour ce faire on commence par revêtir le substrat par un dépôt électrolytique de nickel tungstène à partir d'un des bains de compositions suivantes :
Formulation à base de sulfate de nickel :
   - Sulfate de nickel heptahydraté: NiSO₄, 7 H₂O (20 g/L)
   - Tungstate de sodium dihydraté: NaWO₄, 2H₂O (100g/L)
   - Acide citrique mono-hydraté: C₆H₈O₇,H₂0 (66g/L)
   - Ammoniaque: NH₄OH (en quantité suffisante pour ajuster le pH du bain électrolytique à 7,5)
Formulation à base de chlorure de nickel :
   - Sulfate de nickel heptahydraté: NiCl2, 6 H₂O (20 g/L)
   - Tungstate de sodium dihydraté: NaWO₄, 2H₂O (100g/L)
   - Acide citrique mono-hydraté: C₆H₈O₇,H₂0 (66g/L)
   - Ammoniaque: NH4OH (en quantité suffisante pour ajuster le pH du bain électrolytique à 7,5)

La température du bain est de 70°C, la densité de courant appliquée (entre 7 et 15 A/dm²) permet d'obtenir une concentration en tungstène comprise entre 46 et 49 % massique dans le codépôt.

Le dépôt obtenu est ensuite traité thermiquement sous un vide meilleur que 10⁻⁴Pa pour précipiter les phases d'une barrière de diffusion. Selon la température de l'application finale visée, la durée du recuit sera comprise entre 1 et 16h, soit à la température de 1100°C pour précipiter la phase de tungstène pur, soit à la température de 900°C pour précipiter la phase intermétallique Ni₄W. Ces phases de barrières de diffusion font alors partie intégrante du substrat.

Après application d'une feuille d'aluminium et recuit à 650°C pendant 5 heures sous un vide meilleur que 10⁻⁴ Pa, on obtient une couche de β-NiAl surstoechiométrique (Ni₄₀Al₆₀), dont la résistance à l'oxydation est bien connue. Le revêtement ainsi obtenu est composé de trois couches successives de l'extérieur vers l'intérieur : une de β-NiAl de coefficient de dilatation égal à 15,5.10⁻⁶ K⁻¹, puis une couche de nickel quasiment pur de coefficient de dilatation égal à 13.10⁻⁶ K⁻¹, enfin le substrat dont la couche superficielle est enrichie en précipités de tungstène dont les coefficient de dilatation sont de 4,5.10⁻⁶ K⁻¹. On notera que le substrat employé ici, un alliage de type NbSi, a un coefficient de dilatation égal à 10.10⁻⁶ K⁻¹. L'ensemble de ces propriétés (bonne résistance à l'oxydation du β-NiAl, effet barrière de diffusion de la couche enrichie en tungstène, adaptation des coefficients de dilatation des différentes couches) fait qu'on obtient in fine un revêtement adhérent parfaitement adapté au substrat niobium silicium.

### Exemple 5

On se propose de construire un revêtement protecteur sur un alliage réfractaire à base de niobium et de silicium appelé matériau de type Nb-Si. Le but ici est d'obtenir un revêtement d'aluminiure de nickel modifié par du palladium.

Pour ce faire on commence par revêtir le substrat par un dépôt électrolytique de nickel d'une trentaine de micromètres comme dans l'exemple 1. Ce dépôt est suivi d'un second dépôt électrolytique d'alliage palladium nickel cette fois-ci à partir du bain de composition suivante :

| | | |
|---|---|---|
| Chlorure de palladium tétramine | Pd(NH₄)₄Cl₂ | 24 gL⁻¹ 0,09 M |
| Chlorure de nickel hexahydraté | NiCl₂, 6 H₂O | 40 gL⁻¹ 0,17 M |
| Chlorure d'ammonium | NH₄Cl | 100 gL⁻¹1,87 M |
| Ammoniaque | NH₄OH | q. s. p. pH = 8,0 |
| Température de dépôt | 25°C | |
| Densité de courant | 3 Adm⁻² | |

Le revêtement obtenu peut optionnellement être recuit sous un vide meilleur que 10⁻⁴Pa.

On opère ensuite l'étape d'application d'aluminium. L'ensemble est ensuite recuit à 650°C pendant 5h. On obtient ainsi une couche de (Ni,Pd)Al fortement surstoechiométrique en aluminium et dont la résistance à l'oxydation à haute température est bien connue. Il est remarquable de constater que subsiste entre le substrat et le revêtement d'aluminiure de nickel modifié par le palladium une couche de nickel pratiquement pur qui sert d'adaptateur de contraintes d'origine thermo mécanique.

### Exemple 6

On utilise un substrat en matériau à base de niobium et de silicium. On commence par revêtir le substrat d'un dépôt de chrome électrolytique à partir du bain classique suivant :

| | | |
|---|---|---|
| Trioxyde chrome | CrO₃ | 250 g/L |
| Acide sulfurique | H₂SO₄ | 2,5 g/L |
| Température | 40°C | |
| Densité de courant | 50 A/dm² | |

Dans ces conditions, comme il est bien connu de l'homme de l'art, on obtient un dépôt de chrome pur d'une épaisseur de 25 µm environ en 55 minutes. Dans le cadre de cette invention on dépose une couche comprise entre 10 et 30 µm, l'épaisseur préférée étant de 20 µm.

A la suite de cette opération l'ensemble substrat + dépôt de chrome est nickelé comme dans l'exemple 1.

On opère ensuite l'étape d'application d'aluminium, suivie de son traitement thermique à 650°C pendant 5h. On obtient une couche de β-NiAl, dont la résistance à l'oxydation est bien connue, reposant sur une couche de Ni enrichie en chrome.

Il est possible de faire suivre l'obtention de ce revêtement d'un traitement thermique optionnel de 7 heures à 1100°C soit sous vide, soit sous argon. A l'issue de ce traitement la composition chimique du revêtement β-NiAl se rapproche de la stoechiométrie. L'excédent d'aluminium est absorbé par la couche de nickel pur qui devient alors bêta et gamma prime (Ni₃Al). Cette dernière phase pouvant solubiliser beaucoup de chrome, une continuité entre le revêtement protecteur et le substrat est assurée.

### Exemple 7

Soit une pièce protégée selon l'exemple 1.

Après obtention du revêtement on observe une zone mal revêtue (cas d'une pièce percée ou présentant une forme très particulière).

On répare alors localement la zone par une retouche par électrolyse d'une solution de nickel au tampon. Cette opération de retouche est effectuée conformément au procédé d'électrolyse sélective sans immersion connu sous le nom de procédé DALIC®. Cette opération de retouche est suivie de l'application d'un patch d'aluminium sous forme de petite feuille appliquée selon la technique d'application d'aluminium décrite précédemment. On opère un recuit sous un vide meilleur que 10⁻⁴ Pa à la température de 650°C pendant 5 heures. A l'issue de cette opération, la zone est réparée et ne présente plus aucune solution de continuité.

### Exemple 8

Soit une pièce protégée selon l'exemple 1.

Après obtention du revêtement et après service on observe un écaillage du revêtement β-NiAl. En service l'écaillage est visible car le nickel sous-jacent forme aussitôt de l'oxyde vert.

On opère alors une désoxydation locale selon des méthodes bien connues de l'homme de l'art, par exemple dans un bain de désoxydation. Cette opération est suivie d'une retouche par électrolyse d'une solution de nickel au tampon, come décrit dans l'exemple 7. Le dépôt est ensuite recouvert d'un patch d'aluminium sous forme de petite feuille appliquée selon la technique d'application d'aluminium décrite précédemment. On opère un recuit sous un vide meilleur que 10⁻⁴ Pa à la température de 650°C pendant 5 heures. A l'issue de cette opération, la zone est réparée et ne présente plus aucune solution de continuité.

### Exemple 9

On se propose de revêtir un superalliage base nickel, de l'IN738, encore appelé Inconel®738. L'ensemble, IN738 n'ayant fait l'objet d'aucun dépôt préalable de nickel et son enveloppe d'aluminium, est porté à 650°C sous un vide meilleur que 10⁻⁴ Pa à 650°C pendant 5 heures. A l'issue de ce test la réaction de dépôt n'a pas eu lieu, c'est-à-dire qu'on retrouve le substrat IN738 emmailloté dans une feuille d'aluminium non fondue.

On répète l'expérience mais en recouvrant l'échantillon d'IN738 d'une couche de nickel électrolytique d'environ 22 µm comme dans l'exemple 1. L'IN738 nickelé est mis ensuite en papillote. Après un traitement thermique de 5 heures sous un vide meilleur que 10⁻⁴ Pa à 650°C l'échantillon est revêtu d'une couche de 35 µm environ d'épaisseur de β-NiAl surstoechiométrique en aluminium de composition Ni₄₀Al₆₀. Cette couche est séparée du substrat par une couche résiduelle en nickel pur d'une épaisseur d'environ 15 µm. Un examen plus attentif de la microstructure montre que cette technique de revêtement n'a pas réchauffé le coeur du matériau (pas de dissolution de la phase γ' dans la matrice y du superalliage). Cette constatation est corroborée par la faible interdiffusion entre la sous couche de nickel et le substrat IN738.

De la même manière que dans les exemples 5 ou 6 ce revêtement pourrait être modifié par du palladium, du platine et/ou du chrome.

### Exemple 10

On procède comme dans l'exemple 9, sauf que le dépôt de nickel est un dépôt de nickel chimique composite Ni + NiZr selon la technique décrite dans le brevet français n° 2 807 073 (brevet US n° 7 160 582). A l'issue du dépôt le superalliage est revêtu d'une couche d'environ 20 µm de nickel contenant une fraction massique de 15 % de l'intermétallique NiZr en inclusion. L'ensemble est ensuite revêtu d'une feuille d'aluminium comme dans les exemples précédents (T = 650°C, P = 10⁻⁴ Pa, t = 5 heures). A l'issue de cette opération on obtient un revêtement de β-NiAl surstoechiométrique en aluminium de composition Ni₄₀Al₆₀ de 35 µm environ d'épaisseur surmontant une couche résiduelle en nickel composite d'une épaisseur d'environ 15 µm. La faible élévation de température du substrat a permis de conserver intacte la microstructure du dépôt composite. Cet état de fait permet ensuite, grâce à un recuit de diffusion approprié, sous vide ou, de préférence sous argon, de diminuer d'une part la teneur en aluminium du revêtement (pour obtenir une composition proche de la stoechiométrie) et, d'autre part de favoriser l'interdiffusion contrôlée entre les particules de NiZr incluses et l'ensemble du revêtement, ce qui permet d'enrichir le β-NiAl en élément réactif, ici du zirconium.

Il est à noter que cette opération aurait pu être menée avec un codépôt contenant du hafnium, de l'yttrium, du cérium, ou de tout autre élément réactif dont les propriétés de renforcement de l'adhérence de la couche d'alumine thermiquement formée sous oxygène à la surface des revêtements d'aluminiure de nickel sont bien connues de l'homme de l'art.

### Exemple 11

On se propose de revêtir un assemblage d'un matériau de type Nb-Si et de CMSX-4®,soit un matériau à base de niobium-silicium avec un matériau à base de nickel. Après assemblage des deux matériaux (par brasage, soudage, rivetage, etc.), l'ensemble est revêtu d'une couche de nickel électrolytique d'une épaisseur de 40 µm environ, comme décrit dans l'exemple 1. L'ensemble nickelé est ensuite revêtu dune feuille d'aluminium, toujours comme dans l'exemple 1. Après un traitement thermique de 5 heures sous un vide meilleur que 10⁻⁴ Pa à 650°C l'ensemble matériau de type Nb-Si + CMSX-4 est revêtu d'une couche homogène de 35 µm environ d'épaisseur de β-NiAl surstoechiométrique en aluminium de composition Ni₄₀Al₆₀ surmontant une sous-couche de nickel pur d'environ 15 µm.

Cette technique est la seule qui permette de créer un revêtement de β-NiAl, modifié ou non, sans que l'on constate un « effet matériau » dû à l'interdiffusion durant l'élaboration du revêtement.

### Exemple 12

On opère comme dans l'exemple 1, mais avec un assemblage constitué d'un alliage base nickel dénommé Nimonic75 (alliage base nickel contenant 20% pds. de chrome) brasé à un aluminiure de titane TiAl gamma (composition Ti-46.5Al-4(Cr,Nb,Ta,B)) selon la technique décrite dans le brevet français n°2 857 892 (brevet US n° 7749 614), un revêtement déposé de 37 µm de nickel et une feuille de papier d'aluminium de 25 µm.

Après un traitement thermique de 5 heures sous un vide meilleur que 10⁻⁴ Pa à 650°C l'ensemble matériau de type Nb-Si + N75 est revêtu d'une couche homogène de 70 µm environ d'épaisseur de β-NiAl surstoechiométrique en aluminium de composition Ni₄₀Al₆₀ surmontant une sous-couche de nickel pur d'environ 20 µm.

### Exemple 13

On opère avec un alliage réfractaire à base de niobium et de silicium appelé matériau de type Nb-Si comme dans l'exemple 1, sauf que le revêtement de nickel est de 17 µm, la feuille de papier d'aluminium étant de 22, 7 µm et que, volontairement, il y a une face surmontée d'une couche d'aluminium sans contact avec le dépôt de nickel.

Quel que soit l'état du contact de la feuille d'aluminium, les résultats sur les deux faces sont similaires.

Ces résultats montrent qu'il n'est pas nécessaire d'avoir un contact parfait entre la feuille d'aluminium et le dépôt de nickel.

### Exemple 14

On opère comme dans l'exemple 1, mais avec un alliage dénommé 35NCD16 (acier faiblement allié) et avec un revêtement déposé de 30 µm de nickel et une feuille de papier d'aluminium de 19,8 µm d'épaisseur.

Comme dans le cas de l'alliage réfractaire à base de niobium et de silicium, on observe une morphologie du dépôt identique, à savoir :
- une zone dans laquelle la réaction a eu lieu pour former un β-NiAl (58/42) presque stoechiométrique sur environ 30 µm d'épaisseur, et
- une zone où se trouve le nickel sur environ 20 µm.

### Exemple 15

On opère comme dans l'exemple 1, mais avec un alliage dénommé acier inox 18/10, un revêtement déposé de 25 µm de nickel et une feuille de papier d'aluminium de 25 µm.

Comme dans le cas de l'alliage réfractaire à base de niobium et de silicium, on observe une morphologie du dépôt identique, à savoir :
- une zone dans laquelle la réaction a eu lieu pour former un β-NiAl (58/42) presque stoechiométrique sur environ 30 µm d'épaisseur, et
- une zone où se trouve le nickel sur environ 16 µm d'épaisseur.

### Exemple 16

On opère comme dans l'exemple 1, mais avec un alliage de titane dénommé TA6V (Ti-6Al-4V), un revêtement déposé de 47 µm de nickel et une feuille de papier d'aluminium de 27 µm.

Comme dans le cas de l'alliage réfractaire à base de niobium et de silicium, on observe une morphologie du dépôt identique, à savoir :
- une zone dans laquelle la réaction a eu lieu pour former un β-NiAl (58/42) presque stoechiométrique sur environ 53µm d'épaisseur, et
- une zone où se trouve le nickel sur environ 11 µm d'épaisseur.

### Exemple 17

On opère comme dans l'exemple 1, mais avec un aluminiure de titane gamma TiAl de composition Ti48Al2Cr2Nb, un revêtement déposé de 32 µm de nickel et une feuille de papier d'aluminium de 23 µm.

Comme dans le cas de l'alliage réfractaire à base de niobium et de silicium, on observe une morphologie du dépôt identique, à savoir :
- une zone dans laquelle la réaction a eu lieu pour former un β-NiAl (58/42) presque stoechiométrique sur environ 40 µm d'épaisseur, et
- une zone où se trouve le nickel sur 20 µm environ d'épaisseur.

### Exemple 18a

Cet exemple ainsi que les exemples 18b, 19a et 19b sont destinés à montrer que la durée minimale du traitement thermique nécessaire pour que la réaction de formation de NiAl soit complète doit être adaptée en fonction du matériau.

On opère comme dans l'exemple 1, mais avec un revêtement déposé de 30 µm de nickel et une feuille de papier d'aluminium de 17 µm et l'ensemble (matériau de type Nb-Si nickelé et feuille d'aluminium) est introduit dans un four sous un vide meilleur que 10⁻⁴ Pa. On y opère un recuit à 650°C, soit en deçà de la température de fusion de l'aluminium, pendant 30 minutes (et non cinq heures).

De la surface vers le substrat, ce qui deviendra la couche de β-NiAl non fissurée après cinq heures se présente au microscope électronique à balayage, sous forme de deux couches successives :
- une première couche non homogène constituée de zones en aluminium n'ayant pas réagi et de zones de NiAl (40/60 at.) d'épaisseur environ 15µm. Dans cette couche, la réaction n'est pas complète,
- et une couche riche en nickel avec, sur les premiers microns de cette couche, une interdiffusion de l'aluminium dans le nickel. Cette couche de nickel mesure environ entre 25 et 28µm d'épaisseur. Ce qui signifie qu'une très faible quantité de nickel est consommée au cours de la réaction pour transformer le nickel et l'aluminium en aluminiure de nickel.

La durée de 30 minutes n'est pas suffisante, pour cet exemple, pour obtenir les deux couches de β-NiAl et de nickel reposant sur le substrat

### Exemple 18b

On opère comme dans l'exemple 1, mais l'ensemble (matériau de type Nb-Si nickelé et revêtu d'aluminium) est introduit dans un four sous un vide meilleur que 10⁻⁴ Pa. On y opère un recuit à 650°C, soit en deçà de la température de fusion de l'aluminium, pendant une heure (et non cinq heures). En surface, et comme vu au microscope électronique à balayage, on peut distinguer une morphologie de trois types :
- une première en forme d'aiguilles, qui sont après analyse (EDS) riches en aluminium (75% at) et en nickel (25 % at) soit une phase aluminium enrichie en nickel. Dans cette zone la réaction n'est pas complète,
- une deuxième zone, qui est riche en aluminium (60 % at) et en nickel (40% at) soit un NiAl surstoechiométrique et illustre une zone qui a réagi totalement, et
- enfin une zone intermédiaire qui est une zone avec du nickel (50 % at) etde l'aluminium (40 % at) soit un NiAl stoechiométrique.

A la différence de l'exemple 18a (traitement thermique de 30 minutes) on n'observe pas en surface d'aluminium pur n'ayant pas réagi mais la réaction de formation du NiAl surstoechiométrique n'est pas complète comme dans le cas de l'exemple 1(traitement thermique de 5 heures).

La durée d'une heure n'est pas suffisante, pour cet exemple, pour obtenir les deux couches de β-NiAl et de nickel reposant sur le substrat

### Exemple 19a

On opère comme dans l'exemple 1, mais avec un revêtement déposé de 14 µm de nickel, une feuille de papier d'aluminium de 17 µm et avec un superalliage à base nickel dénommé MC-NG (superalliage monocristallin à base de nickel comme décrit dans FR 2 780 982 et EP 0 971 041 B1). L'ensemble (matériau MC-NG nickelé et revêtu d'aluminium) est introduit dans un four sous un vide meilleur que 10⁻⁴ Pa. On y opère un recuit à 650°C, soit en-deçà de la température de fusion d'aluminium, pendant 30 minutes (et non cinq heures).

Comme dans le cas de l'exemple 18a (avec un matériau de type Nb-Si et un recuit de 30 minutes à 650°C), on observe en coupe de la surface vers le substrat une morphologie à deux couches:
- une première couche non homogène constituée de zones en aluminium Al n'ayant pas réagi et de zones de NiAl (40/60 at.) d'épaisseur environ 23 µm.
- une couche de nickel résiduel de 10 µm.

La durée de 30 minutes n'est pas suffisante, pour cet exemple, pour obtenir les deux couches de β-NiAl et de nickel reposant sur le substrat

### Exemple 19b

On opère comme dans l'exemple 19a, mais l'ensemble (matériau MC-NG nickelé et revêtu d'aluminium) est introduit dans un four sous un vide meilleur que 10⁻⁴ Pa. On y opère un recuit à 650°C, soit en-deçà de la température de fusion d'aluminium, pendant une heure (et non 30 minutes). En surface, et comme vu au microscope électronique à balayage, la morphologie est homogène et de composition de surface correspondant à la formation d'un NiAl sur stoechiométrique comme dans le cas de l'exemple 1. La réaction est donc complète dans cet exemple.

La durée minimale du traitement thermique nécessaire pour que la réaction de formation de NiAl soit complète doit donc être adaptée en fonction du matériau et plus précisément de ses caractéristiques thermiques, la réaction de formation de NiAl étant exothermique.

### Exemple 20

Cet exemple décrit le principe de l'application de la feuille d'aluminium. Il s'agit de déposer un revêtement contenant du nickel, de le faire diffuser ou non, et de déposer une feuille d'aluminium, de traiter sous vide à 650°C pendant une durée supérieure à une heure et variable selon l'alliage, une durée de cinq heures étant préférée, afin d'obtenir un revêtement à base de NiAl, le revêtement initial à base de nickel étant totalement ou partiellement transformé.

Comme on dépose un revêtement à base de nickel, il est possible d'envisager de faire des codépôts, comme un dépôt de nickel-palladium, nickel- platine, nickel-zirconium ou un dépôt de chrome suivi d'un dépôt de nickel, ce qui va permettre d'avoir une meilleure résistance à l'oxydation qu'un simple NiAl (exemples 5, 6 et 10), un dépôt de NiW qui en plus du revêtement de NiAl va crée une barrière de diffusion et stabiliser le NiAl (exemple 4).

Il résulte de la description ci-dessus, et notamment des exemples, que les pièces comprenant un substrat métallique muni d'un revêtement en aluminure de nickel, telles qu'obtenues par la mise en œuvre du procédé de l'invention, ont des caractéristiques techniques différentes de celles des pièces qui pourraient être obtenues par d'autres procédés de l'art antérieur.

Comme mentionné plus haut, le procédé de l'invention ne crée pas de zone d'interdiffusion entre l'alliage traité et le nickel résiduel et il n'y a pas de remontées d'éléments de l'alliage, ni en solution, ni sous forme de précipités dans le nickel résiduel ou dans la couche de NiAl formée, comme c'est le cas dans les aluminisations classiques. Le procédé de l'invention permet d'avoir un revêtement de NiAl non fissuré, contrairement aux dépôts obtenus par pulvérisation de cibles, par exemple cathodique triode.

Ceci sera mieux compris en référence aux dessins annexés, sur lesquels :
- la figure 1 représente schématiquement une coupe micrographique d'une pièce revêtue, telle qu'obtenue par le procédé de l'invention ;
- la figure 2 est une vue analogue à la figure 1 dans le cas d'un matériau de type Nb-Si protégé par le procédé de l'invention ;
- la figure 3 représente schématiquement, à titre de comparaison, une coupe micrographique d'une pièce revêtue, comprenant un matériau de type Nb-Si (MASC) munie d'un dépôt de nickel, telle qu'obtenue parc un procédé de l'art antérieur ; et
- la figure 4 montre schématiquement, à titre de comparaison, une microscopie en surface d'une pièce revêtue d'une couche de NiAl, telle qu'obtenue par un autre procédé de l'art antérieur.

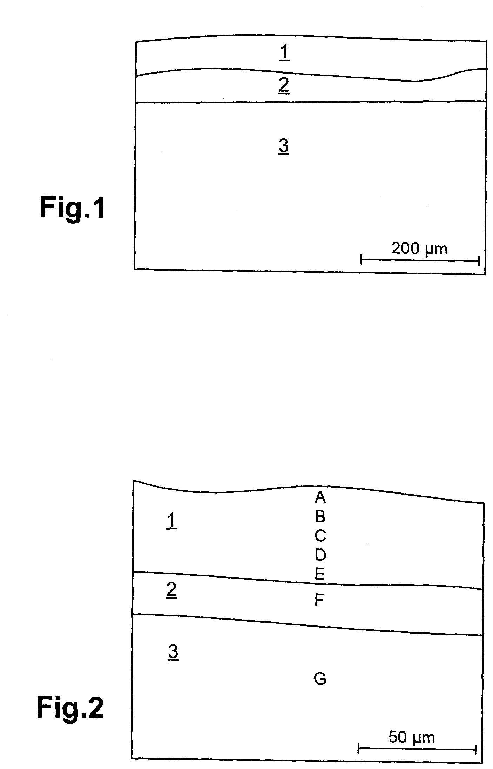

La figure 1 représente une coupe micrographique d'une pièce revêtue selon le procédé de l'invention. La pièce est constituée par une couche externe dense de NiAl non fissurée 1, une couche de nickel pur non fissurée 2 reposant sur un matériau 3 à protéger. On retrouve cette structure quelle que soit la nature du matériau 3 à protéger. Sur la figure 1, on a fait figurer une échelle correspondant à une longueur de 200 µm pour montrer les épaisseurs des couches 1 et 2.

Des analyses par dispersion d'énergie au microscope à balayage permettent de confirmer que les couches de NiAl et de nickel sont pures comme le montrent la figure 2 et le tableau 1 ci-dessous.

La figure 2 est une vue analogue à la figure 1 dans le cas d'un matériau de type Nb-Si protégé par le procédé de l'invention. Comme sur la figure 1, on retrouve une couche externe de NiAl 1, une couche de nickel 2 reposant sur le matériau 3 à protéger, en l'espèce un matériau de type Nb-Si. Sur la figure 2, on a représenté également une échelle correspondant à 50 µm.

Sur la figure 2, on a représenté différents points A, B, C, D, E, F et G des couches 1, 2 et 3. Les pourcentages atomiques des éléments des couches 1, 2 et 3 aux points A à G sont indiqués au tableau 1 ci-dessous.

**Tableau 1**

| | A%(Al) (±1) | A% (Ni) (±1) | A% (Nb, Ti, Cr, Hf, Si) Eléments du matériau substrat |
|---|---|---|---|
| A | 60(±5) | 40(±5) | 0 |
| B | 58(±5) | 42(±5) | 0 |
| C | 58(±5) | 42(±5) | 0 |
| D | 57(±5) | 43(±5) | 0 |
| E | 56(±5) | 44(±5) | 0 |
| F | 0 | 100 | 0 |
| G | 4 (±2) | 0 | 96(±2) |

Ce tableau montre que la couche 1 est composée de β-NiAl de moyenne (42/58) et que la couche 2 est composée de nickel pur. La composition de la couche 3 est celle du matériau substrat.

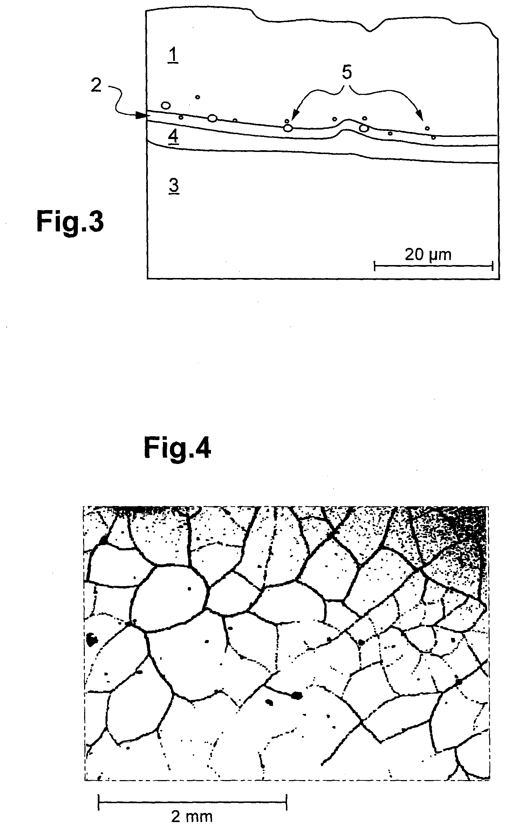

A titre de comparaison, on a montré sur les figures 3 et 4 des pièces obtenues par des procédés de l'art antérieur.

La figure 3 montre les caractéristiques d'un matériau de type Nb-Si (MASC) avec un dépôt de nickel suivi d'une aluminisation en phase vapeur à 1050°C pendant 16 heures, conformément à un procédé classique. Sur la figure 3, on a représenté également une échelle correspondant à 20 µm.

La figure 4 montre une microscopie en surface d'une pièce revêtue d'une couche de NiAl obtenue par une technique classique à basse température (exemple par pulvérisation d'une cible) - faïençage de la couche de NiAl-matériau sous-jacent : matériau à base de Nb-Si.

Ces procédés pour réaliser de telles couches obtiennent des caractéristiques de pièces différentes de celles de l'invention. Ainsi, en référence à la figure 3, on trouve une couche d'inter-diffusion 4 entre le couche de nickel 2 et le matériau 3 à protéger, avec parfois la présence de précipités 5 près des couches de NiAl ou de Ni. On obtient ce type de faciès lorsque la pièce est revêtue par un dépôt de nickel et est ensuite aluminisée avec des procédés classiques d'aluminisation du type cémentation en caisse, en vapeur, par slurry, CVD et PVD.

De tels faciès sont décrits par exemple dans les publications de Youlin Li, Wolé Soboyejo, Robert A. Rapp, « Oxidation behavior of niobium aluminide intermetallics protected by aluminide and silicide diffusion coatings », Metallurgical and Materials transaction B. volume 30B, june 1999, 495-503 ou de A. Katsman U, A. Ginzburg, T. Werber, I. Cohen, L. Levin, Surface and Coatings Technology 127, 2000, 220-223.

La figure 4 montre le type de faciès obtenu lorsque la pièce revêtue est obtenue par un procédé à basse température comme un dépôt par pulvérisation de cibles (cathodique triode, magnétron, etc.). Dans ce cas, il y a absence de couche d'interdiffusion, mais la couche de NiAl est alors faïencée, la présence de fissures étant visible en surface à l'œil nu, comme on peut le constater d'après l'échelle de 2mm représentée sur la figure 4.

Comme mentionné plus haut, l'invention s'applique à différents types de substrats métalliques.

Le procédé permet de créer un revêtement protecteur à base de NiAl, il peut s'appliquer à la réparation locale d'un revêtement, même si celui-ci a été élaboré par une autre voie, (par exemple une aluminisation) et pour un revêtement neuf ou vieilli (après oxydation, corrosion). Ceci est décrit aux exemples 7 et 8.

Enfin, le procédé présente l'avantage de pouvoir créer un revêtement protecteur à base de NiAl sur un assemblage de pièces (de matériaux différents ou similaires), comme le montrent les exemples 11 et 12.

Enfin, on peut envisager d'assembler et de protéger en même temps des pièces de matériaux différents ou similaires.

L'invention s'applique notamment à la protection des matériaux utilisés dans les turbines des moteurs aéronautiques.

## Revendications

1. Procédé d'obtention d'un revêtement d'aluminiure de nickel sur un substrat métallique, **caractérisé en ce qu'**il comprend les étapes suivantes :
a) revêtir le substrat d'un dépôt de nickel ;
b) appliquer une feuille d'aluminium sur le dépôt de nickel de l'étape a) pour former un ensemble constitué par le substrat revêtu du dépôt de nickel et de la feuille d'aluminium ; et
c) soumettre cet ensemble à un traitement thermique à une température de 550°C à 655°C, pendant au moins 1 heure et sous un vide meilleur que 10⁻⁴ Pa, pour provoquer une réaction entre l'aluminium et le nickel et former ainsi une couche d'aluminiure de nickel β-NiAl surmontant une couche de nickel, et ce sans emploi de gaz halogéné.

2. Procédé selon la revendication 1, **caractérisé en ce que** l'étape a) comprend un dépôt de nickel pur ou d'un alliage de nickel.

3. Procédé selon la revendication 2, **caractérisé en ce que** l'alliage de nickel comprend au moins un élément choisi parmi W, Ce, Cr, Pt, Pd, Hf, Y et Zr.

4. Procédé selon l'une des revendications 1 et 3, **caractérisé en ce que** l'étape a) comprend un dépôt de nickel suivi d'un dépôt d'un alliage de nickel en particulier d'un alliage de nickel-palladium.

5. Procédé selon l'une des revendications 1 et 3, **caractérisé en ce que** l'étape a) est précédée d'une étape préalable de dépôt d'une couche d'un métal autre que du nickel, en particulier de chrome.

6. Procédé selon l'une des revendications 1 et 5, **caractérisé en ce que** le dépôt de nickel de l'étape a) est réalisé par voie humide, en particulier par un procédé électrolytique ou chimique.

7. Procédé selon l'une des revendications 1 à 5, **caractérisé en ce que** le dépôt de nickel de l'étape a) est réalisé par voie sèche, en particulier par Pulvérisation Cathodique Triode (PCT), par Dépôt Physique en Phase Vapeur (PVD) ou par Dépôt Chimique en Phase Vapeur (CVD).

8. Procédé selon l'une des revendications 1 à 7, **caractérisé en ce que** l'étape a) est suivie d'une étape intermédiaire de recuit du dépôt de nickel, ce qui provoque une diffusion du nickel au sein du substrat.

9. Procédé selon l'une des revendications 1 à 8, **caractérisé en ce que** l'étape b) comprend l'application d'une feuille ou plusieurs feuilles d'aluminium sur le substrat revêtu de dépôt de nickel et la déformation de la feuille ou des feuilles de nickel pour s'adapter à la forme du substrat.

10. Procédé selon l'une des revendications 1 à 9, **caractérisé en ce que** le traitement thermique de l'étape c) est réalisé à une température de 650°C, de préférence pendant 5 heures.

11. Procédé selon l'une des revendications 1 à 10, **caractérisé en ce que** l'étape c) de traitement thermique est suivie par une étape d) de recuit sous vide ou sous atmosphère contrôlée et à une température comprise entre 800 et 1200 °C.

12. Procédé selon l'une des revendications 1 à 11, **caractérisé en ce que** le substrat est formé d'au moins un matériau choisi parmi les matériaux de type Nb-Si, les alliages base fer dont les aciers (c'est à dire les alliage base fer dont la teneur en carbone est comprise entre 0,008 % et 2,14 % en masse) qu'ils soient alliés ou traités, les alliages base nickel (alliages réfractaires et superalliages), les alliages base cobalt (alliages réfractaires et superalliages), les alliages base titane et certains intermétalliques comme les aluminiures de titane TiAl.

13. Procédé selon l'une des revendications 1 à 12, **caractérisé en ce que** le revêtement d'aluminiure de nickel est appliqué sur une pièce neuve formée à partir du substrat.

14. Procédé selon l'une des revendications 1 à 12, **caractérisé en ce que** le revêtement d'aluminiure de nickel est appliqué sur un revêtement existant d'une pièce pour une réparation locale de ce revêtement existant.

15. Procédé selon l'une des revendications 13 et 14, **caractérisé en ce que** la pièce est formée par un assemblage de deux matériaux.

16. Procédé selon la revendication 14, **caractérisé en ce que** l'étape a) comprend un dépôt de nickel par une retouche de nickel par électrolyse au tampon et l'étape b) comprend l'application d'une petite feuille d'aluminium sur la retouche de nickel.

17. Pièce comprenant un substrat métallique revêtu d'un dépôt formant une couche de nickel et muni d'un revêtement en aluminiure de nickel β-NiAl surmontant la couche de nickel tel qu'obtenu par la mise en œuvre du procédé selon l'une des revendications 1 à 16.

## Patentansprüche

1. Verfahren zum Erhalten einer Nickelaluminid-Beschichtung auf einem Metallsubstrat, **dadurch gekennzeichnet, dass** es folgende Schritte umfasst:
(a) Beschichten des Substrats mit einem Nickelüberzug;
(b) Aufbringen einer Aluminiumfolie auf den Nickelüberzug aus Schritt a), um eine Anordnung zu bilden, die durch das Substrat, das mit dem Nickelüberzug beschichtet ist, und die Aluminiumfolie gebildet ist; und
(c) Unterziehen dieser Anordnung einer Wärmebehandlung bei einer Temperatur von 550 °C bis 655°C während mindestens 1 Stunde und unter einem Vakuum von besser als 10⁻⁴ Pa, um eine Reaktion zwischen dem Aluminium und dem Nickel zu bewirken und dadurch eine β-NiAl-Nickelaluminidschicht, die über einer Nickelschicht liegt, ohne Verwendung von halogeniertem Gas zu bilden.

2. Verfahren nach Anspruch 1, **dadurch gekennzeichnet, dass** Schritt a) einen Überzug aus reinem Nickel oder einer Nickellegierung umfasst.

3. Verfahren nach Anspruch 2, **dadurch gekennzeichnet, dass** die Nickellegierung mindestens ein Element, ausgewählt aus W, Ce, Cr, Pt, Pd, Hf, Y und Zr, umfasst.

4. Verfahren nach einem der Ansprüche 1 und 3, **dadurch gekennzeichnet, dass** Schritt a) einen Überzug aus Nickel, gefolgt von einem Überzug aus einer Nickellegierung, insbesondere einer Nickel-Palladium-Legierung, umfasst.

5. Verfahren nach einem der Ansprüche 1 und 3, **dadurch gekennzeichnet, dass** vor Schritt a) ein vorheriger Schritt des Überzugs mit einer Schicht aus einem anderen Metall als Nickel, insbesondere Chrom, erfolgt.

6. Verfahren nach einem der Ansprüche 1 und 5, **dadurch gekennzeichnet, dass** der Nickelüberzug aus Schritt a) nass, insbesondere durch ein elektrolytisches oder chemisches Verfahren, verwirklicht wird.

7. Verfahren nach einem der Ansprüche 1 bis 5, **dadurch gekennzeichnet, dass** der Nickelüberzug aus Schritt a) trocken, insbesondere durch Kathodentriodenzerstäubung (PCT), durch physikalische Dampfphasenabscheidung (PVD) oder durch chemische Gasphasenabscheidung (CVD) verwirklicht wird.

8. Verfahren nach einem der Ansprüche 1 bis 7, **dadurch gekennzeichnet, dass** auf Schritt a) ein Zwischenschritt des Glühens des Nickelüberzugs folgt, der eine Diffusion des Nickels innerhalb des Substrats bewirkt.

9. Verfahren nach einem der Ansprüche 1 bis 8, **dadurch gekennzeichnet, dass** Schritt b) das Aufbringen einer oder mehrerer Aluminiumfolien auf das mit dem Nickelüberzug beschichtete Substrat und das Verformen der Nickelfolie oder Nickelfolien entsprechend der Form des Substrats umfasst.

10. Verfahren nach einem der Ansprüche 1 bis 9, **dadurch gekennzeichnet, dass** die Wärmebehandlung aus Schritt c) bei einer Temperatur von 650 °C, vorzugsweise 5 Stunden lang erfolgt.

11. Verfahren nach einem der Ansprüche 1 bis 10, **dadurch gekennzeichnet, dass** auf Schritt c) der Wärmebehandlung ein Schritt d) des Glühens unter Vakuum oder kontrollierter Atmosphäre und bei einer Temperatur zwischen 800 und 1.200 °C folgt.

12. Verfahren nach einem der Ansprüche 1 bis 11, **dadurch gekennzeichnet, dass** das Substrat aus mindestens einem Material gebildet ist, das ausgewählt ist aus Materialien vom Typ Nb-Si, Eisenbasislegierungen einschließlich Stählen (d. h. Eisenbasislegierungen mit einem Kohlenstoffgehalt zwischen 0,008 % und 2,14 Gew.-%), ob legiert oder behandelt, Nickelbasislegierungen (hitzebeständigen und Superlegierungen), Kobaltbasislegierungen (hitzebeständigen und Superlegierungen), Titanbasislegierungen und einigen intermetallischen Verbindungen wie TiAl-Titanaluminiden.

13. Verfahren nach einem der Ansprüche 1 bis 12, **dadurch gekennzeichnet, dass** die Nickelaluminid-Beschichtung auf ein neues Teil aufgebracht wird, das aus dem Substrat gebildet ist.

14. Verfahren nach einem der Ansprüche 1 bis 12, **dadurch gekennzeichnet, dass** die Nickelaluminid-Beschichtung auf eine bestehende Beschichtung eines Teils aufgebracht wird, um die bestehende Beschichtung lokal zu reparieren.

15. Verfahren nach einem der Ansprüche 13 und 14, **dadurch gekennzeichnet, dass** das Teil durch Zusammenfügen von zwei Materialien gebildet ist.

16. Verfahren nach Anspruch 14, **dadurch gekennzeichnet, dass** Schritt a) einen Nickelüberzug durch eine Nickelaufarbeitung mittels Pufferelektrolyse umfasst und Schritt b) das Aufbringen einer kleinen Aluminiumfolie auf die Nickelaufarbeitung umfasst.

17. Teil, umfassend ein Metallsubstrat, das mit einem Überzug, der eine Nickelschicht bildet, beschichtet ist und mit einer β-NiAl-Nickelaluminidschicht versehen ist, die über der Nickelschicht liegt, die durch Umsetzen des Verfahrens nach einem der Ansprüche 1 bis 16 erhalten wurde.

## Claims

1. Method for obtaining a nickel aluminide coating on a metal substrate, **characterized in that** it comprises the following steps:
a) coating the substrate with a deposition of nickel;
b) applying an aluminium foil to the deposition of nickel of step a) in order to form an assembly constituted by the substrate coated with the deposition of nickel and the aluminium foil; and
c) subjecting the assembly to heat treatment at a temperature from 550°C to 655°C for at least 1 hour and under a vacuum better than 10⁻⁴ Pa in order to cause a reaction between the aluminium and the nickel and thus form a layer of nickel aluminide β-NiAl on top of a layer of nickel, and without using halogenated gas.

2. Method according to claim 1, **characterized in that** step a) comprises a deposition of pure nickel or of a nickel alloy.

3. Method according to claim 2, **characterized in that** the nickel alloy comprises at least one element chosen from W, Ce, Cr, Pt, Pd, Hf, Y and Zr.

4. Method according to either claim 1 or claim 3, **characterized in that** step a) comprises a deposition of nickel followed by a deposition of a nickel alloy, in particular of a nickel-palladium alloy.

5. Method according to either claim 1 or claim 3, **characterized in that** step a) is preceded by a prior step of depositing a layer of a metal other than nickel, in particular of chromium.

6. Method according to either claim 1 or claim 5, **characterized in that** the deposition of nickel of step a) is carried out by a wet method, in particular by an electrolytic or chemical process.

7. Method according to any one of claims 1 to 5, **characterized in that** the deposition of nickel of step a) is carried out by a dry method, in particular by triode cathode sputtering (TCS), by physical vapour deposition (PVD) or by chemical vapour deposition (CVD).

8. Method according to any one of claims 1 to 7, **characterized in that** step a) is followed by an intermediate step of annealing the deposition of nickel, which causes diffusion of the nickel within the substrate.

9. Method according to any one of claims 1 to 8, **characterized in that** step b) comprises applying an aluminium foil or a plurality of aluminium foils to the substrate coated with deposition of nickel and deforming the aluminium foil or foils to match the shape of the substrate.

10. Method according to any one of claims 1 to 9, **characterized in that** the heat treatment of step c) is carried out at a temperature of 650°C, preferably for 5 hours.

11. Method according to any one of claims 1 to 10, **characterized in that** step c) of heat treatment is followed by a step d) of annealing *in vacuo* or under a controlled atmosphere and at a temperature of from 800 to 1200°C.

12. Method according to any one of claims 1 to 11, **characterized in that** the substrate is formed of at least one material chosen from materials of type Nb-Si, iron-based alloys including steels (that is to say iron-based alloys the carbon content of which is between 0.008% and 2.14% by mass), which may be alloyed or treated, nickel-based alloys (refractory alloys and superalloys), cobalt-based alloys (refractory alloys and superalloys), titanium-based alloys, and some intermetallics such as titanium aluminides TiAl.

13. Method according to any one of claims 1 to 12, **characterized in that** the nickel aluminide coating is applied to a new part formed from the substrate.

14. Method according to any one of claims 1 to 12, **characterized in that** the nickel aluminide coating is applied to an existing coating of a part for locally repairing the existing coating.

15. Method according to either claim 13 or claim 14, **characterized in that** the part is formed by an assembly of two materials.

16. Method according to claim 14, **characterized in that** step a) comprises a deposition of nickel by retouching with nickel by pad electrolysis, and step b) comprises applying a small aluminium foil to the nickel retouching.

17. Part comprising a metal substrate provided with a nickel aluminide coating as obtained by carrying out the method according to any one of claims 1 to 16.
